# EUROPEAN PATENT SPECIFICATION

(11) **EP 3 653 585 B1**
(45) Date of publication and mention of the grant of the patent: **31.12.2025**
(21) Application number: 19208720.3
(22) Date of filing: 12.11.2019
(51) Int. Cl.: C02F 1/44, B01D 61/06, F04B 9/115, F15B 3/00

(54) **REVERSE OSMOSIS WATERMAKER WITH PRESSURE AMPLIFIER**
UMKEHROSMOSE-WASSERMACHER MIT DRUCKVERSTÄRKER
DESSALINISATEUR À OSMOSE INVERSE AVEC AMPLIFICATEUR DE PRESSION

(30) Priority: 13.11.2018 IT 201800010303
(43) Date of publication of application: 20.05.2020
(73) Proprietor: Schenker Italia S.r.l., 80147 Napoli (IT)
(72) Inventor: VERDE, Riccardo, I-80129 Italy (IT)
(74) Representative: Cantaluppi, Stefano

(56) References cited:
- WO-A1-2013/018036
- FR-A1- 2 732 727
- GB-A- 803 038
- US-A- 4 734 013
- US-B1- 6 203 696
- US-B2- 8 052 865

## Description

This invention deals with a reverse osmosis desalinator of the type comprising the features mentioned in the preamble of the principal claim.

A desalinator comprising such features is known from FR2732727. Another known desalinator is described in US6491813.

This desalinator uses a pressure amplifier of the double cylinder and double piston type to transform a medium-pressure water flow generated by a pump into a high-pressure flow suitable to supply the reverse osmosis membranes of a desalinator. Other types of pressure amplifiers or recuperators are also usable for this purpose. Typically, they are so-called Clark pump amplifiers. These desalinators are used on board recreational watercraft where the availability of electricity to power the desalinator is quite limited, given they are generally low voltage and direct current systems.

Use on board small and medium-size watercraft however poses numerous problems of a technical nature for which known desalinators have not provided an effective answer. A first problem deals with minimization of space requirements. As a matter of fact, the dimensions of known desalinators are not always compatible with space availability on board. In any case, the reduction of such space requirements remains an extremely important objective both for the watercraft manufacturers and for the boaters who reluctantly give up storage space that could otherwise be used on board. Moreover, there is the problem of the cost and of the sensitivity of the high and medium pressure fittings and tubes which, beyond constituting a source of potential damage, represent a cost also in the manufacturing and assembly stage of the desalinator.

A further problem addressed and solved by this invention is producing a desalinator in which the coupling between the heads, pressure amplifier and vessels that contain the reverse osmosis membranes is particularly simple but effective, easy to assemble and disassemble and at the same time highly reliable, notwithstanding the considerable pressures in play.

The base problem of this invention is providing a desalinator that is particularly designed for use in recreational watercraft which, beyond guaranteeing low consumption and contained costs, can be made with reduced space requirements and in such a way that installation is simple in minimal and not otherwise easy to use spaces.

Within the scope of this problem, an important task of the invention is to simplify assembly of the desalinator and reduce manufacturing costs thereof. At the same time, the desalinator according to the invention has less visible fittings and tubes and is therefore more solid and less subject to damage.

This problem is solved and these advantages are achieved with a reverse osmosis desalinator according to claim 1.

The reverse osmosis desalinator comprises:
- a pressure amplifier of the double cylinder and piston type,
- a respective closure head for each cylinder,
- at least one reverse osmosis group with pressurization container closed at the opposite axial ends by respective heads,
- as well as valve systems and flow conduits which are connected to the heads in order to control the pressurized water flow from and towards the pressure amplifier and the flow of product and discharge from and towards the reverse osmosis group, in which at least some of the flow conduits, and/or the seats of the valve systems, are integrated in the heads.

Preferably, both cylinders of the pressure amplifier are inserted creating a seal in a respective seat of the respective head and the high-pressure container of the at least one osmosis group having opposite longitudinal ends housed creating a seal in respective seats which are formed in the heads.

According to the invention, the heads are interconnected to each other and held in place by insertion onto the cylinders and the container by rods extended between the opposite heads.

The presence of the rods and their placement between the heads permit balancing of the load exerted by the water under pressure in the high-pressure containers and in the cylinders of the pressure amplifier.

Preferably, the flow conduits which are integrated in the heads at least partially comprise the exchange conduits between the pressure amplifier and the reverse osmosis group, or rather all or almost all of the conduits that require high-pressure-resistant (in the order of 50-80 bar) fittings and tubes, as well as all, or almost all, the conduits that require medium-pressure-resistant (in the order of 7-10 bar) fittings and tubes. Such conduits and fittings are made as a single piece through appropriate machining of the heads which close both the cylinders of the pressure amplifier and the containers (cylinders) that pressurize the membranes.

It is possible to make desalinators with these heads which integrate the flow conduits, both with one membrane as well as multiple membranes, with minimal use of external fittings or tubes, as these components are integrated in the heads through machining of the same.

The aforementioned heads also comprise the seats of the non-return valves, if there are any, hydraulically connected to the cylinders of the pressure amplifier. Although it is possible to form these valves in the central part of the pressure amplifier, where the main switching valve of the amplifier is integrated, the positioning of these seats in the same bodies that form the heads offers the advantage of greater accessibility of these valves and easy machining of the same.

The features and advantages of the invention will be more clearly shown in the detailed description of an illustrated preferred embodiment, given solely by way of example, with reference to the appended drawings in which:
- FIGS. 1 and 2 are respectively transparent and solid perspective views of a desalinator made according to this invention;
- FIGS. 3 through 6 are elevation and perspective views of a head of the desalinator of the preceding figures;

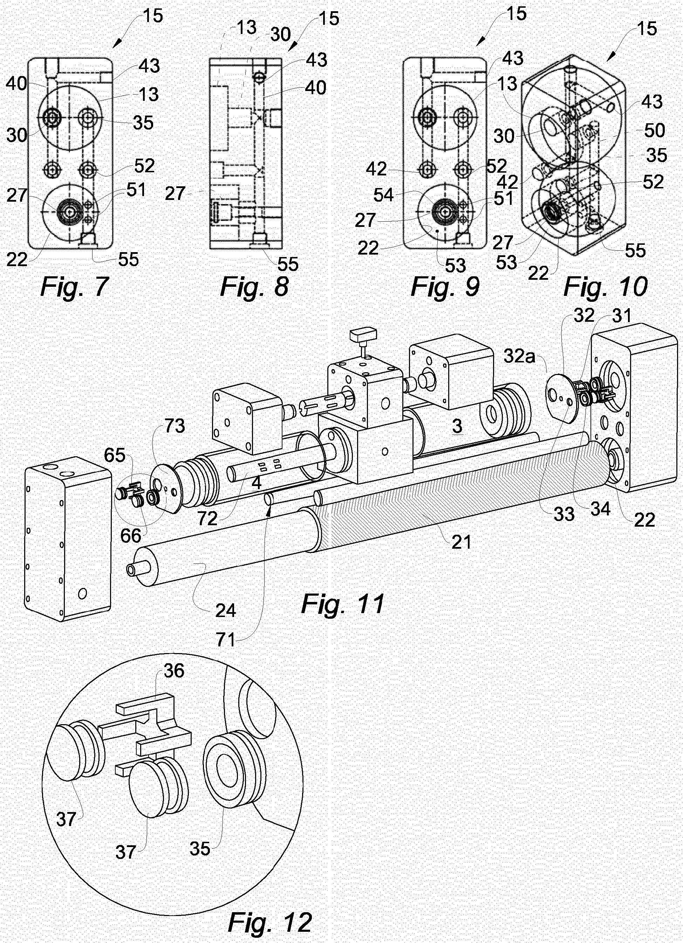

- FIGS. 7 through 10 are elevation and perspective views of another, opposite head of the desalinator of the preceding figures;
- FIG. 11 is a perspective exploded view of the desalinator of FIG. 1;
- FIG. 12 is an enlarged detail of the same desalinator;
- FIG. 13 is a perspective view of a desalinator according to the invention with double reverse osmosis group.

In the figures, 1 indicates as a whole a reverse osmosis desalinator according to this invention.

The desalinator 1 comprises an opposing-piston-type pressure amplifier 2, with a double cylinder 3,4 and respective double piston 5,6 attached at the respective axial end of a shaft 7. The shaft 7 has multiple sets of longitudinal incisions 8 arranged like a crown at the periphery of the shaft itself to form four crowns axially spaced at pitch. The two cylinders are coaxial and engaged to protrude from parts that are axially opposite of a central valve body 9 on which is mounted an exchanger valve system 10 with a moveable cassette 11. The functioning and the structural components of the pressure amplifier 2 are the same ones described in patent US6491813 to which reference is made for eventual in-depth analysis and details. It is pointed out that both cylinders 3,4 are inserted creating a seal in a respective seat 12 of the central body 9 and in a respective seat 13, 14 of a respective head 15, 16 which are axially opposite. On the exchanger 10, a collector 18 is highlighted for the discharge of the post-treatment waste that, in the case of marine applications, is made up of a saline solution which is more concentrated than the inflow of sea water.

The desalinator 1 comprises, moreover, one or more reverse osmosis groups 20, each one comprising a high-pressure container or vessel 21, closed at the opposite axial ends by the respective heads 15, 16. The containers 21 are effectively high-pressure-resistant pipes, made of metal or preferably of a composite structure, of which the opposite longitudinal ends are housed creating a seal in respective seats 22, 23 which are formed in the heads 15, 16.

A membrane 24, which is wrapped in the form of a cylinder-shaped cartridge, is placed inside each container, with respective opposite inflow and outflow terminals 25 housed in respective seal-creating connectors 27 in the seats of the respective heads 15,16.

The desalinator 1 comprises, lastly, valve systems and flow conduits connected to the heads in order to control the pressurized water flow from and towards the pressure amplifier as well as the flow of filtered and discharge product from and towards the reverse osmosis group.

The heads 15, 16 each comprise a respective prismatic block (or of any other preferred shape) preferably made of plastics material or of other corrosion-resistant materials. The two heads 15, 16 are connected to each other by means of rods 17.

The first head 15 comprises a collector 18 with related hose connector for the supply of the water to be treated. When the desalinator is operating, saltwater at medium pressure (7-10 bar), coming from a low/medium pressure pump that is not represented, is supplied to the collector 18.

The collector 18 is open in a first seat 30 for a first unidirectional valve 31, which is formed in the thickness of the head 15. The valve 31 is suitable to allow the flow from the collector 18 towards the piston 5, passing through a first hole 32a of plate 32 that has a second hole 33 and that works as end-point closure of the cylinder 3, being located near the end of the same which is housed in the seat 13 of the head 15.

A second unidirectional valve 34 is housed in a second seat 35 which is also formed in the thickness of the head 15. The valve 34 communicates with the second hole 33 of the plate 32, is structurally identical to the first valve 31 but is oriented in the opposite direction to allow only the outflow from the chamber defined between the head 15 and the piston 3, but not vice versa. The unidirectional valves 31, 34 both comprise a sealing seat 35, a cage 36 and a closure member 37 held between the cage 36 and the seat 35, free to move from and towards the seat 35 on the basis of the direction of the flow that passes through it. When the closure member 37 is in contact with the seat 35, the valve is closed and vice versa it is otherwise open.

A first conduit 40 is formed in the head 15 and connects the collector 18, a seat for a pressure gage 41, a first transfer seat 42 between the heads 15,16 and an opening 43 for a transfer tube 44 between the collector 18 and the central body 9.

A second conduit 50 is formed in the head 15 parallel to the conduit 40 and links the seat 35 of the second unidirectional valve, a second transfer seat 52 and a series of adductor holes 51 leading into the chamber 53 which is formed between the connector 27 which protrudes in the seat 22 of the head 15 and the wall of the seat 22 itself. Water under pressure, which is intended for the filtration through the reverse osmosis membrane 22, is introduced in this chamber 53 through the holes 51. The filtered product is expelled from the desalinator via a delivery conduit 54, opened in the centre of the connector 27 and able to communicate in a sealed manner with a central cavity of the membrane 22.

The second conduit 50 is plugged and sealed by a plug 55.

On the opposite side, the head 16 respectively comprises, in addition to the seats 14, 23 for the cylinder 4 and for the opposite end of the container under pressure 21, two conduits 61, 62 which connect a third and respectively fourth seat 63, 64 for a respective third and fourth unidirectional valve 65, 66 with a respective third and fourth transfer seat 67, 68.

The first and third transfer seats, 42 and 67, and the second and fourth transfer seats 52 and 68 are respectively connected to one another by tubular transfer conduits 71,72 which engage creating a seal in the aforementioned seats and extend between the two heads. The unidirectional valves 65, 66 are respectively oriented to allow the flow from and towards the chamber defined between the piston 6 and a second plate 73 which is identical in shape and has the identical function of the plate 32 and also has the identical holes. All the aforementioned unidirectional valves are identical in shape and function.

A second transfer tube 80 is lastly connected between a chamber 81 defined between the connector 27 protruding in the seat 23 of the head 16 and the wall of the seat itself and the exchanger valve system 10 with a moveable cassette to feed water under pressure, intended for the functioning of the amplifier 2, to the latter.

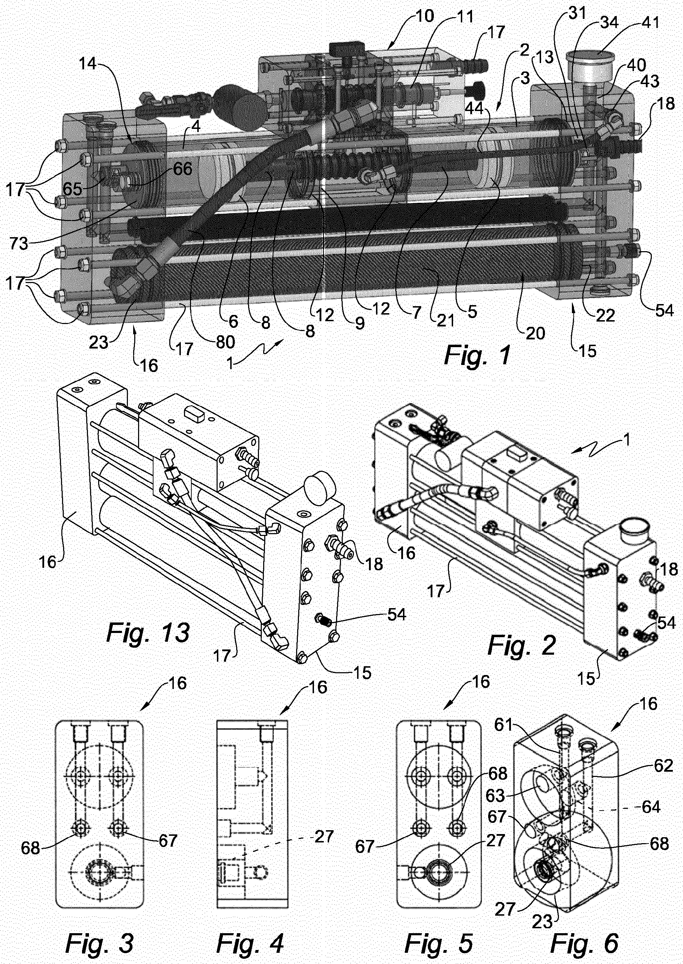

In the event in which multiple reverse osmosis groups are used (FIG. 13), they will preferably be connected in series as regards the flow of water to be treated and in parallel as regards the flow of the filtered product. Here too, the connection conduits are integrated in the heads according to the logic indicated above.

It will be appreciated that by integrating all (or almost all) the flow conduits and the seats of the valve systems both of the pressure amplifier and of the reverse osmosis groups in the heads and using, therefore, only two heads for a desalinator, a substantial reduction of the total space required for the desalinator is obtained, in practice limited only by the external diameter of the pressurization container and by the length of the same. The desalinator may also be arranged in any position whatsoever inside storage lockers, including narrow ones, whether horizontally or up against sides, walls, partitions or the like.

## Claims

1. A reverse osmosis desalinator comprising:
- a pressure amplifier (2) of the double cylinder (3, 4) and piston (5, 6) type,
- a respective closure head (15, 16) for each cylinder,
- at least one reverse osmosis group (20) with a high-pressure container (21) which is closed at the opposite axial ends by respective heads (15, 16), said heads (15, 16) comprising a first head (15) and a second head (16),
- and valve systems (30-37) and flow conduits (51-55) which are connected to the heads (15,16) in order to control the pressurized water flow from and towards the pressure amplifier (2) and the flow of product and discharge from and towards the reverse osmosis group (20),
- in which at least part of the flow conduits and/or of the seats of the valve systems (30-37 and 51-55) are integrated in the heads (15,16), and
- both cylinders (3, 4) of the pressure amplifier are inserted creating a seal in a respective seat (13, 14) of the respective head (15, 16), and
- the high-pressure container of the at least one osmosis group having opposite longitudinal ends housed and sealed in the respective seats (22, 23) which are formed in the heads (15, 16), **characterized by** the heads (15, 16) being interconnected to each other and engaged onto the cylinders (3,4) and the container (21) by rods (17) extended between the opposite heads and in that the first head (15) comprises a collector (18) with related hose connector for the supply of the water to be treated, the collector (18) being open in a first seat (30) for a first unidirectional valve (31), which is formed in a thickness of the first head (15), said first unidirectional valve (31) being suitable to allow the flow from the collector (18) towards the piston (5), passing through a first hole (32a) of a plate (32) that has a second hole (33) and that works as end-point closure of the cylinder (3), being located near an end of the same which is housed in the seat (13) of the first head (15), a second unidirectional valve (34) being housed in a second seat (35) which is also formed in the thickness of the first head (15), wherein the second unidirectional valve (34) communicates with the second hole (33) of the plate (32) and is structurally identical to the first valve (31) but is oriented in the opposite direction to allow only the outflow from the chamber defined between the head (15) and the piston (5), but not vice versa, wherein a first conduit (40) is formed in the head (15) and connects the collector (18), a seat for a pressure gage (41), a first transfer seat (42) between the heads (15, 16) and an opening (43) for a transfer tube (44) between the collector (18) and the central body (9), wherein a second conduit (50) is formed in the head (15) parallel to the conduit (40) and links the seat (35) of the second unidirectional valve (34), a second transfer seat (52) and a series of adductor holes (51) leading into a chamber (53) which is formed between the connector (27) which protrudes in the seat (22) of the head (15) and a wall of the seat (22) itself, wherein water under pressure, which is intended for the filtration through a reverse osmosis membrane, is introduced in this chamber (53) through the holes (51), wherein filtered product is expelled from the desalinator via a delivery conduit (54), opened in a centre of the connector (27) and able to communicate in a sealed manner with a central cavity of the membrane, and in that the second head (16) respectively comprises two conduits (61, 62) which connect a third and respectively fourth seat (63, 64) for a respective third and fourth unidirectional valve (65, 66) with a respective third and fourth transfer seat (67, 68), the first and third transfer seats (42, 67), and the second and fourth transfer seats (52, 68) are respectively connected to one another by tubular transfer conduits (71, 72) which engage creating a seal in the aforementioned seats and extend between the two heads (15, 16), the third and fourth unidirectional valves (65, 66) being respectively oriented to allow a flow from and towards a chamber defined between the piston (6) and a second plate (73) which is identical in shape and has identical function of said plate (32) of the first head (15) and also has the identical holes, wherein all the aforementioned unidirectional valves are identical in shape and function.

2. A desalinator according to claim 1, wherein the flow conduits which are integrated in the heads (15, 16) at least partially comprise the exchange conduits between the pressure amplifier (2) and the reverse osmosis group (20).

3. A desalinator according to claim 1 or 2, comprising a plurality of reverse osmosis groups (20) which are interconnected via respective flow conduits which are formed in the heads (15, 16).

4. A desalinator according to claim 3, wherein the reverse osmosis groups (20) are connected to each other in series.

5. A desalinator according to one or more of the preceding claims, wherein the seats of the valve systems integrated in the heads comprise the seats (30, 35) of the non-return valves (31, 34) which are applied to the ends directed towards the heads (15, 16) of the cylinders (3, 4) of the pressure amplifier (2).

6. A desalinator according to claim 5, wherein the non-return valves comprise a closure member (37) which floats in a cage (36) which is connected to a valve seat.

7. A desalinator according to any one of the preceding claims, wherein the tubular transfer conduits (71, 72) are held in their respective seats through the rod coupling between the two heads.

8. A desalinator according to one or more of the preceding claims, wherein the heads comprise respective prismatic blocks wherein are formed both the seats for the cylinders as well as the seats for the pressure containers of the reverse osmosis groups, wherein in the seats of the container are formed respective seal-creating connectors (27) for the membrane of the reverse osmosis groups.

9. A desalinator according to claim 8, wherein the flow conduits and/or the seats of the valve systems integrated in the heads are formed by piercing of the heads.

10. A desalinator according to one or more of the preceding claims in which said rods (17) are placed between said heads (15, 16) such as to equilibrate the load applied by the pressurized water in the cylinders (3, 4) of the pressure amplifier and in the high pressure container (21).

## Patentansprüche

1. Umkehrosmose-Entsalzungsanlage, umfassend:
- einen Druckverstärker (2) vom Typ Doppelzylinder (3, 4) und Kolben (5, 6),
- einen jeweiligen Verschlusskopf (15, 16) für jeden Zylinder,
- zumindest eine Umkehrosmosegruppe (20) mit einem Hochdruckbehälter (21), der an den gegenüberliegenden axialen Enden durch jeweilige Köpfe (15, 16) verschlossen ist, wobei die Köpfe (15, 16) einen ersten Kopf (15) und einen zweiten Kopf (16) aufweisen,
- und Ventilsysteme (30 bis 37) und Strömungsleitungen (51 bis 55), die mit den Köpfen (15, 16) verbunden sind, um den Druckwasserfluss vom und zum Druckverstärker (2) sowie den Produktfluss und die Ableitung von und zur Umkehrosmosegruppe (20) zu steuern,
- wobei zumindest ein Teil der Strömungsleitungen und/oder der Sitze der Ventilsysteme (30 bis 37 und 51 bis 55) mit den Köpfen (15, 16) einstückig sind, und
- beide Zylinder (3, 4) des Druckverstärkers abdichtend in einen jeweiligen Sitz (13, 14) des jeweiligen Kopfes (15, 16) eingesetzt sind, und
- der Hochdruckbehälter der zumindest einen Osmosegruppe gegenüberliegende Längsenden aufweist, die in den jeweiligen Sitzen (22, 23), die in den Köpfen (15, 16) ausgebildet sind, aufgenommen und abgedichtet sind, **gekennzeichnet durch** die Köpfe (15, 16), die miteinander verbunden sind und durch zwischen den gegenüberliegenden Köpfen verlaufende Stangen (17) mit den Zylindern (3, 4) und dem Behälter (21) in Eingriff stehen, und durch den ersten Kopf (15) mit einem Sammler (18) mit zugehörigem Schlauchanschluss für die Zufuhr des zu behandelnden Wassers, wobei der Sammler (18) in einem ersten Sitz (30) für ein erstes Einwegventil (31) offen ist, das in einer Dicke des ersten Kopfes (15) ausgebildet ist, wobei das erste Einwegventil (31) geeignet ist, um den Fluss vom Sammler (18) zum Kolben (5) zu ermöglichen, der durch ein erstes Loch (32a) einer Platte (32) hindurchgeht, die ein zweites Loch (33) aufweist und als Endverschluss des Zylinders (3) dient und in der Nähe eines Endes derselben angeordnet ist, das im Sitz (13) des ersten Kopfes (15) aufgenommen ist, wobei ein zweites Einwegventil (34) in einem zweiten Sitz (35) aufgenommen ist, der ebenfalls in der Dicke des ersten Kopfes (15) ausgebildet ist, wobei das zweite Einwegventil (34) mit dem zweiten Loch (33) der Platte (32) in Verbindung steht und strukturell mit dem ersten Ventil (31) identisch ist, jedoch in die entgegengesetzte Richtung ausgerichtet ist, um nur den Abfluss aus der zwischen dem Kopf (15) und dem Kolben (5) ausgebildeten Kammer zu ermöglichen, nicht jedoch umgekehrt, wobei eine erste Leitung (40) im Kopf (15) ausgebildet ist und den Sammler (18), einen Sitz für ein Druckmessgerät (41), einen ersten Transfersitz (42) zwischen den Köpfen (15, 16) und eine Öffnung (43) für ein Transferrohr (44) zwischen dem Sammler (18) und dem Zentralkörper (9) verbindet, wobei eine zweite Leitung (50) im Kopf (15) parallel zur Leitung (40) ausgebildet ist und den Sitz (35) des zweiten Einwegventils (34), einen zweiten Transfersitz (52) und eine Reihe von Zufuhrlöchern (51) verbindet, die in eine Kammer (53) führen, die zwischen dem Anschluss (27), der in den Sitz (22) des Kopfes (15) hineinragt, und einer Wand des Sitzes (22) selbst ausgebildet ist, wobei Wasser unter Druck, das zur Filtration durch eine Umkehrosmosemembran bestimmt ist, in diese Kammer (53) durch die Löcher (51) eingeleitet wird, wobei ein gefiltertes Produkt aus dem Entsalzer über eine Zufuhrleitung (54) ausgestoßen wird, die in einer Mitte des Anschlusses (27) geöffnet ist und in der Lage ist, auf abgedichtete Weise mit einem zentralen Hohlraum der Membran zu kommunizieren, und dass der zweite Kopf (16) jeweils zwei Leitungen (61, 62) aufweist, die einen dritten und jeweiligen vierten Sitz (63, 64) für ein jeweiliges drittes und viertes Einwegventil (65, 66) mit einem jeweiligen dritten und vierten Transfersitz (67, 68) verbinden, wobei der erste und dritte Transfersitz (42, 67) und der zweite und vierte Transfersitz (52, 68) jeweils durch röhrenförmige Transferleitungen (71, 72) miteinander verbunden sind, die in die oben genannten Sitze eingreifen und eine Abdichtung erzeugen und sich zwischen den beiden Köpfen (15, 16) erstrecken, wobei das dritte und vierte Einwegventil (65, 66) jeweils ausgerichtet sind, um einen Fluss von und zu einer Kammer zu ermöglichen, die zwischen dem Kolben (6) und einer zweiten Platte (73) ausgebildet ist, die die gleiche Form und Funktion wie die Platte (32) des ersten Kopfes (15) und auch die gleichen Löcher aufweist, wobei alle zuvor genannten Einwegventile in Form und Funktion identisch sind.

2. Entsalzungsanlage nach Anspruch 1, wobei die mit den Köpfen (15, 16) einstückigen Strömungsleitungen zumindest teilweise die Austauschleitungen zwischen dem Druckverstärker (2) und der Umkehrosmosegruppe (20) aufweisen.

3. Entsalzungsanlage nach Anspruch 1 oder 2, die eine Mehrzahl von Umkehrosmosegruppen (20) aufweist, die über jeweilige Strömungsleitungen, die in den Köpfen (15, 16) ausgebildet sind, miteinander verbunden sind.

4. Entsalzungsanlage nach Anspruch 3, wobei die Umkehrosmosegruppen (20) in Reihe miteinander verbunden sind.

5. Entsalzungsanlage nach einem oder mehreren der vorhergehenden Ansprüche, wobei die Sitze der mit den Köpfen einstückigen Ventilsysteme die Sitze (30, 35) der Rückschlagventile (31, 34) aufweisen, die an den zu den Köpfen (15, 16) gerichteten Enden der Zylinder (3, 4) des Druckverstärkers (2) angebracht sind.

6. Entsalzungsanlage nach Anspruch 5, wobei die Rückschlagventile ein Verschlusselement (37) aufweisen, das in einem Käfig (36) schwimmt, der mit einem Ventilsitz verbunden ist.

7. Entsalzungsanlage nach einem der vorhergehenden Ansprüche, wobei die rohrförmigen Transferleitungen (71, 72) in ihren jeweiligen Sitzen durch die Stangenkupplung zwischen den beiden Köpfen gehalten werden.

8. Entsalzungsanlage nach einem oder mehreren der vorhergehenden Ansprüche, wobei die Köpfe jeweilige prismatische Blöcke aufweisen, in denen sowohl die Sitze für die Zylinder als auch die Sitze für die Druckbehälter der Umkehrosmosegruppen ausgebildet sind, wobei in den Sitzen des Behälters jeweilige dichtungserzeugende Anschlüsse (27) für die Membran der Umkehrosmosegruppen ausgebildet sind.

9. Entsalzungsanlage nach Anspruch 8, wobei die Strömungsleitungen und/oder die Sitze der mit den Köpfen einstückigen Ventilsysteme durch Durchdringen der Köpfe gebildet werden.

10. Entsalzungsanlage nach einem oder mehreren der vorhergehenden Ansprüche, bei der die Stangen (17) zwischen den Köpfen (15, 16) angeordnet sind, um die durch das Druckwasser in den Zylindern (3, 4) des Druckverstärkers und im Hochdruckbehälter (21) aufgebrachte Last auszugleichen.

## Revendications

1. Dessalinisateur à osmose inverse comprenant :
- un amplificateur de pression (2) du type à double cylindre (3, 4) et piston (5, 6),
- une tête de fermeture (15, 16) respective pour chaque cylindre,
- au moins un groupe à osmose inverse (20) avec un récipient à haute pression (21) qui est fermé aux extrémités axiales opposées par des têtes (15, 16) respectives, lesdites têtes (15, 16) comprenant une première tête (15) et une seconde tête (16),
- et des systèmes de soupapes (30-37) et des conduits d'écoulement (51-55) qui sont reliés aux têtes (15,16) afin de contrôler l'écoulement d'eau sous pression de et vers l'amplificateur de pression (2) et l'écoulement de produit et de décharge de et vers le groupe à osmose inverse (20),
- dans lequel au moins une partie des conduits d'écoulement et/ou des sièges des systèmes de soupapes (30-37 et 51-55) sont intégrés dans les têtes (15,16), et
- les deux cylindres (3, 4) de l'amplificateur de pression sont insérés en créant un joint dans un siège (13, 14) respectif de la tête (15, 16) respective, et
- le récipient à haute pression de l'au moins un groupe à osmose ayant des extrémités longitudinales opposées logées et scellées dans les sièges respectifs (22, 23) formés dans les têtes (15, 16), **caractérisé en ce que** les têtes (15, 16) sont interconnectées les unes aux autres et engagées sur les cylindres (3, 4) et le récipient (21) par des tiges (17) étendues entre les têtes opposées et **en ce que** la première tête (15) comprend un collecteur (18) avec le raccord de tuyau correspondant pour l'alimentation de l'eau à traiter, le collecteur (18) étant ouvert dans un premier siège (30) pour une première soupape unidirectionnelle (31), qui est formée dans une épaisseur de la première tête (15), ladite première soupape unidirectionnelle (31) pouvant permettre l'écoulement du collecteur (18) vers le piston (5), en passant à travers un premier trou (32a) d'une plaque (32) qui a un second trou (33) et qui fonctionne comme fermeture de point d'extrémité du cylindre (3), étant situé près d'une extrémité de celui-ci qui est logé dans le siège (13) de la première tête (15), une deuxième soupape unidirectionnelle (34) étant logée dans un deuxième siège (35) qui est également formé dans l'épaisseur de la première tête (15), dans lequel la deuxième soupape unidirectionnelle (34) communique avec le second trou (33) de la plaque (32) et est structurellement identique à la première soupape (31) mais est orientée dans la direction opposée pour permettre uniquement l'écoulement de la chambre définie entre la tête (15) et le piston (5), et non l'inverse, dans lequel un premier conduit (40) est formé dans la tête (15) et relie le collecteur (18), un siège pour un manomètre (41), un premier siège de transfert (42) entre les têtes (15, 16) et une ouverture (43) pour un tube de transfert (44) entre le collecteur (18) et le corps central (9), dans lequel un second conduit (50) est formé dans la tête (15) parallèlement au conduit (40) et relie le siège (35) de la deuxième soupape unidirectionnelle (34), un deuxième siège de transfert (52) et une série de trous d'amenée (51) menant à une chambre (53) qui est formée entre le connecteur (27) qui fait saillie dans le siège (22) de la tête (15) et une paroi du siège (22) lui-même, dans lequel de l'eau sous pression, qui est destinée à être filtrée à travers une membrane à osmose inverse, est introduite dans cette chambre (53) à travers les trous (51), dans lequel le produit filtré est expulsé du dessalinisateur par l'intermédiaire d'un conduit de refoulement (54), ouvert au centre du connecteur (27) et pouvant communiquer de manière étanche avec une cavité centrale de la membrane, et **en ce que** la seconde tête (16) comprend respectivement deux conduits (61, 62) qui relient un troisième et respectivement un quatrième siège (63, 64) pour une troisième et quatrième soupape unidirectionnelle (65, 66) respective à un troisième et quatrième siège de transfert (67, 68) respectif, les premier et troisième sièges de transfert (42, 67), et les deuxième et quatrième sièges de transfert (52, 68) sont respectivement reliés l'un à l'autre par des conduits de transfert tubulaires (71, 72) qui s'engagent en créant un joint dans les sièges susmentionnés et s'étendent entre les deux têtes (15, 16), les troisième et quatrième soupapes unidirectionnelles (65, 66) étant respectivement orientées pour permettre un écoulement depuis et vers une chambre définie entre le piston (6) et une seconde plaque (73) étant de forme et de fonction identiques à ladite plaque (32) de la première tête (15) et présentant également des trous identiques, dans lequel toutes les soupapes unidirectionnelles susmentionnées sont de forme et de fonction identiques.

2. Dessalinisateur selon la revendication 1, dans lequel les conduits d'écoulement intégrés dans les têtes (15, 16) comprennent au moins partiellement les conduits d'échange entre l'amplificateur de pression (2) et le groupe à osmose inverse (20).

3. Dessalinisateur selon la revendication 1 ou 2, comprenant une pluralité de groupes à osmose inverse (20) qui sont interconnectés par l'intermédiaire de conduits d'écoulement respectifs formés dans les têtes (15, 16).

4. Dessalinisateur selon la revendication 3, dans lequel les groupes à osmose inverse (20) sont reliés les uns aux autres en série.

5. Dessalinisateur selon l'une ou plusieurs des revendications précédentes, dans lequel les sièges des systèmes de soupapes intégrées dans les têtes comprennent les sièges (30, 35) des soupapes anti-retour (31, 34) qui sont appliquées aux extrémités dirigées vers les têtes (15, 16) des cylindres (3, 4) de l'amplificateur de pression (2).

6. Dessalinisateur selon la revendication 5, dans lequel les soupapes anti-retour comprennent un élément de fermeture (37) qui flotte dans une cage (36) qui est reliée à un siège de soupape.

7. Dessalinisateur selon l'une quelconque des revendications précédentes, dans lequel les conduits de transfert tubulaires (71, 72) sont maintenus dans leurs sièges respectifs par l'intermédiaire du couplage de tige entre les deux têtes.

8. Dessalinisateur selon l'une ou plusieurs des revendications précédentes, dans lequel les têtes comprennent des blocs prismatiques respectifs dans lesquels sont formés à la fois les sièges des cylindres et les sièges des récipients sous pression des groupes à osmose inverse, dans lesquels sont formés dans les sièges des récipients des connecteurs (27) créant un joint pour la membrane des groupes à osmose inverse.

9. Dessalinisateur selon la revendication 8, dans lequel les conduits d'écoulement et/ou les sièges des systèmes de soupapes intégrées dans les têtes sont formés par le perçage des têtes.

10. Dessalinisateur selon l'une ou plusieurs des revendications précédentes, dans lequel lesdites tiges (17) sont placées entre lesdites têtes (15, 16) de manière à équilibrer la charge appliquée par l'eau sous pression dans les cylindres (3, 4) de l'amplificateur de pression et dans le récipient à haute pression (21).
